# FASCICULE DE BREVET EUROPEEN

(11) **EP 0 493 289 B1**
(45) Date de publication et mention de la délivrance du brevet: **09.08.1995**
(21) Numéro de dépôt: 91460058.0
(22) Date de dépôt: 13.12.1991
(51) Int. Cl.: G07C 1/30

(54) **Système et dispositif de comptabilisation du temps comportant des moyens de génération de codes à des moments calculés par un algorithme secret**
System und Vorrichtung zum Verwalten von Zeiteinheiten, die Mittel zum Erzeugen von Codes, zu von einem geheimen Algorithmus berechneten Zeitpunkten, enthalten
Time keeping device and system containing code generating means at given times, where the given times are calculated by a secret algorithm

(30) Priorité: 20.12.1990 FR 9016253
(43) Date de publication de la demande: 01.07.1992
(73) Titulaire: HELLO S.A., F-75002 Paris (FR)
(72) Inventeur: Aschenbrouich, Marc, F-13300 Peyrolles en Provence (FR); Ilie, François, F-75011 Paris (FR); Marechal, Alain, F-75004 Paris (FR)
(74) Mandataire: Dupuis-Latour, Dominique

(56) Documents cités:
- EP-A- 0 034 570
- EP-A- 0 176 465
- EP-A- 0 193 635
- EP-A- 0 402 821
- EP-A- 0 443 915
- WO-A-88/09022
- GB-A- 2 158 628

## Description

Le domaine de l'invention est celui des systèmes et dispositifs de comptabilisation du temps et notamment celui des dispositifs de comptabilisation de durées de stationnement réglementé.

Plus précisément, la présente invention concerne un système et dispositif permettant de vérifier l'authenticité de ce type d'appareil.

On entend par "dispositif (ou système) de comptabilisation de temps" un appareil constitué par exemple par un boîtier, préférentiellement portable, destiné à être posé derrière le pare-brise d'un véhicule et coopérant avec un ticket électronique prépayé, par exemple une carte à mémoire, pour décrémenter des unités de taxe mémorisées sur la carte, en fonction de la durée du stationnement.

Ce type de dispositif permet de s'affranchir de l'utilisation de bornes fixes individuelles (du type parcmètre de trottoir) ou collectives (du type horodateur) ou de boîtiers de stationnement intégrés, tels que ceux décrits dans les EP-A-0 443 915 (document opposable seulement au titre de l'article 54(3) CBE) et EP-A-0 176 465.

L'utilisateur acquitte automatiquement des taxes de stationnement par introduction d'une carte à mémoire prépayée dans son boîtier. Les boîtiers sont généralement vendus, prêtés ou loués par des collectivités locales ou leurs mandataires, qui commercialisent des unités de stationnement, sous forme de cartes d'un type différent pour chaque collectivité locale. La régularité du stationnement peut être vérifiée grâce à un afficheur sur lequel apparaissent les diverses informations nécessaires au personnel de contrôle, par exemple le numéro de zone de stationnement sélectionné par l'utilisateur, un code identifiant notamment le type de carte introduite par l'utilisateur dans le boîtier et représentatif de la ville de stationnement, et le cas échéant une information indicative d'une situation d'infraction, et le nombre d'unités de taxes encore disponibles sur la carte. Les mémoires des cartes peuvent être réinscriptibles ou inscrites irréversiblement.

Un tel dispositif est par exemple décrit dans le WO-A-88/09022. Le dispositif décrit est un boîtier comportant des moyens de gestion des changements de cartes insérées dans le boîtier. Il comprend également des moyens permettant de remettre à l'heure une horloge interne au boîtier, cette horloge servant notamment à décompter régulièrement des unités de taxe et à tenir compte des périodes de temps de la journée où il n'est pas nécessaire de payer un stationnement.

Une préoccupation importante relative à ce type de dispositif est la nécessité de détecter les fraudeurs qui utiliseraient des boîtiers qui n'auraient pas été mis en circulation par l'autorité autorisée. Des fraudeurs pourraient en effet imaginer de fabriquer des boîtiers ayant un même aspect externe que les boîtiers authentiques, mais comprenant uniquement un afficheur coopérant avec une électronique adéquate pour simuler un décompte d'unités de taxes. Il serait alors impossible pour un contrôleur de déceler la fraude sans démonter le boîtier contrefait.

La présente invention a notamment pour objectif de pallier cet inconvénient de l'état de la technique.

Plus précisément, le principal objectif de l'invention est de fournir un dispositif permettant d'empêcher, ou tout du moins de rendre très laborieuse et donc non rentable, l'utilisation de dispositifs de comptabilisation de durées de stationnement réglementé qui constitueraient des contrefaçons de ceux distribués par une autorité reconnue.

Un objectif complémentaire de l'invention est de fournir un tel dispositif qui permette de vérifier l'intégrité tant du boîtier que de la carte qui y est insérée.

Ces objectifs, ainsi que d'autres qui apparaîtront par la suite, sont atteints grâce à un système de comptabilisation du temps au sens indiqué plus haut (tel qu'énoncé par le préambule de la revendication 1 et correspondant au WO-A-88/09022 précité), et comportant les éléments énoncés par la partie caractérisante de la revendication 1.

Les diverses sous-revendications présentent des caractéristiques subsidiaires avantageuses.

D'autres caractéristiques et avantages de la présente invention apparaîtront à la lecture de la description suivante d'un mode de réalisation préférentiel de l'invention, donné à titre illustratif et non limitatif, et des dessins annexés, dans lesquels:
- la figure 1 représente un boîtier selon la présente invention coopérant avec une carte à mémoire;
- les figures 2A et 2B représentent respectivement un premier et un deuxième mode de fonctionnement de l'invention, le premier mode consistant à effectuer un seul changement de code dans une même journée et le second mode consistant à effectuer deux changements de code par heure entière d'une journée;
- les figures 3, 4, 5 et 6 sont des organigrammes illustrant différents aspects d'un mode de fonctionnement préférentiel du système de génération et de gestion des codes secrets selon l'invention.

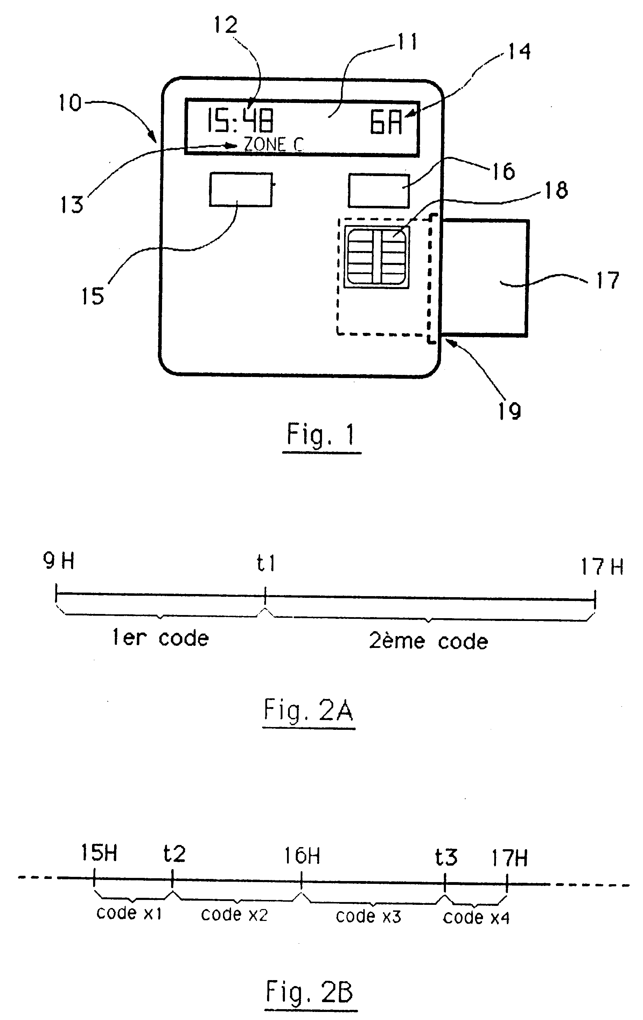

La figure 1 représente un boîtier selon la présente invention coopérant avec une carte à mémoire.

Un boîtier 10 comprend une fente latérale 19 recevant une carte 17 à micro-circuit 18. Le boîtier 10 comprend des moyens d'affichage 11, par exemple constitués par un écran à cristaux liquides. Les moyens d'affichage 11 peuvent afficher continuellenent, ou selon un affichage cyclique déroulant, l'heure courante 12, l'heure de début de stationnement, la zone de stationnement 13 pour laquelle les unités présentes sur la carte 17 sont débitées et un code 14 résultant du calcul secret selon l'invention, et dont l'origine sera détaillée par la suite. Le boîtier 10 comprend également deux touches 15 et 16 permettant notamment de programmer la zone de tarification 13 et d'effectuer la remise à l'heure courante du boîtier 10. Le micro-circuit 18 de la carte 17 communique avec l'électronique du boîtier à travers des moyens de lecture/écriture non représentés.

Le code secret 14 apparaît sur les moyens d'affichage 11 pour permettre à un agent de contrôle de vérifier l'authenticité du boîtier 10. Le code secret 14 présente la caractéristique d'être remis à jour au moins une fois par jour, à un moment inconnu de l'utilisateur. De plus, cette remise à jour est effectuée presque simultanément dans tous les autres boîtiers, selon que leurs horloges intégrées sont plus ou moins à l'heure exacte. Ainsi, si un fraudeur venait à vouloir contrefaire l'apparence extérieure du boîtier 10 pour y intégrer une électronique capable d'afficher sur un afficheur 11 un temps limite de stationnement sans vouloir acquitter de taxes de stationnement (par exemple en disposant par rapport au boîtier une véritable carte 17 de paiement de stationnement de la même façon que celles fonctionnant avec des boîtiers d'origine non frauduleuse), il lui faudrait également être quasiment constamment à côté de son véhicule pour pouvoir afficher le nouveau code, par un moyen quelconque (clavier au dos du boîtier), une fois qu'il en aura pris connaissance, notamment en regardant les codes affichés sur les boîtiers non contrefaits disposés dans d'autres véhicules. Cette contrainte ne lui permet donc pas de s'éloigner de son véhicule, faute de quoi le fraudeur risque de se trouver pénalisé non seulement pour non paiement de son stationnement mais aussi pour escroquerie.

Les figures 2A et 2B représentent deux modes de fonctionnement de l'invention, le premier mode consistant à effectuer un seul changement de code dans une même journée et le second mode consistant à effectuer deux changements de code pour chaque période horaire d'une journée.

Le dispositif de l'invention peut fonctionner selon deux modes:
- le dispositif de l'invention génère deux codes secrets par jour, le second code secret remplaçant le premier à un moment précis de la journée, résultant d'un calcul secret ;
- le dispositif génère deux codes secrets pour chaque période horaire de la journée, le passage d'un code secret à l'autre étant effectué à une minute précise résultant d'un calcul secret. Ce mode de fonctionnement présente une sécurité accrue puisque le code secret est modifié de nombreuses fois par jour.

Le premier mode de fonctionnement est représenté à la figure 2A. La période de stationnement réglementé débute par exemple à 9H00 et se termine à 17H00. Selon un mode de réalisation de l'invention, le premier code s'affiche après introduction de l'élément portable 17 dans le boîtier 10. Dans le cours de la journée, à un instant t₁ résultant d'un calcul secret, le premier code secret est remplacé par un second code secret qui s'affichera jusqu'à la fin de la période de stationnement réglementé. Bien entendu, si l'utilisateur insère sa carte après l'heure de changement de code, c'est le second code qui s'affichera directement. L'instant t₁ est préférentiellement une heure pile mais peut également correspondre à une certaine heure suivie d'un certain nombre de minutes, l'unité de temps de comptabilisation étant la minute.

Le second mode de fonctionnement est représenté à la figure 2B. Ce mode de fonctionnement consiste à changer le code secret deux fois par heure, par exemple une première fois au passage d'une heure pile et une seconde fois à un moment compris dans la période horaire correspondante. Ainsi, en regard de la figure 2B, à 15H00 le code devient x₁ et reste inchangé jusqu'à un instant t₂ où un nouveau code x₂ remplace le code x₁, t₂ résultant d'un calcul secret et étant compris entre 15H00 et 16H00 . Le code x₂ reste alors affiché sur les moyens de visualisation jusqu'à l'heure pile suivante, c'est à dire jusqu'à 16H00. A 16H00, un code secret x₃ remplace le code x₂ jusqu'à un instant t₃ où un code x₄ remplace le code x₃. L'heure de fin de stationnement réglementé étant 17H00, le code x₄ peut soit rester affiché jusqu'au lendemain matin où un nouveau code le remplacera, soit simplement disparaître de l'affichage.

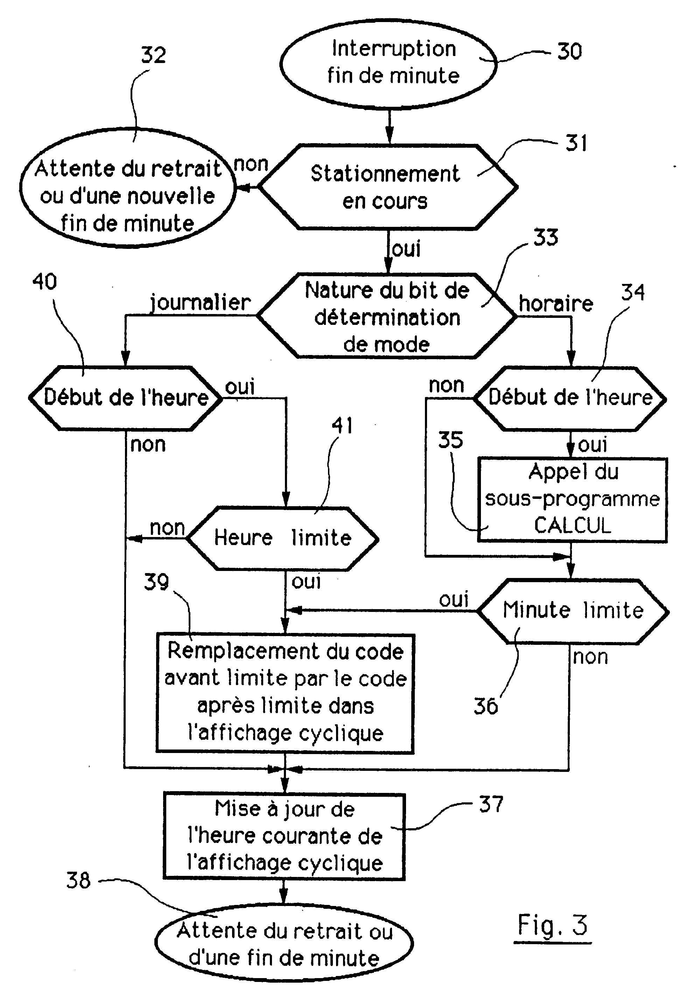

Les figures 3, 4, 5 et 6 sont des organigrammes illustrant différents aspects d'un mode de fonctionnement préférentiel du système de génération et de gestion des codes secrets selon l'invention.

La figure 3 illustre la succession des opérations effectuées par l'unité centrale du système, préférentiellement toutes les minutes.

Lors de chaque interruption de fin de minute, le système vérifie si un stationnement est en cours (31). Dans la négative 32, l'appareil se met en sommeil, jusqu'à la prochaine interruption de fin de minute 30. Les interruptions de fin de minute sont systématiques, dès lors qu'une carte a été introduite dans le boîtier.

Dans le cas où un stationnement est en cours, le système teste ensuite (33) la nature du bit de détermination de code, c'est-à-dire si le système fonctionne en mode horaire ou en mode journalier.

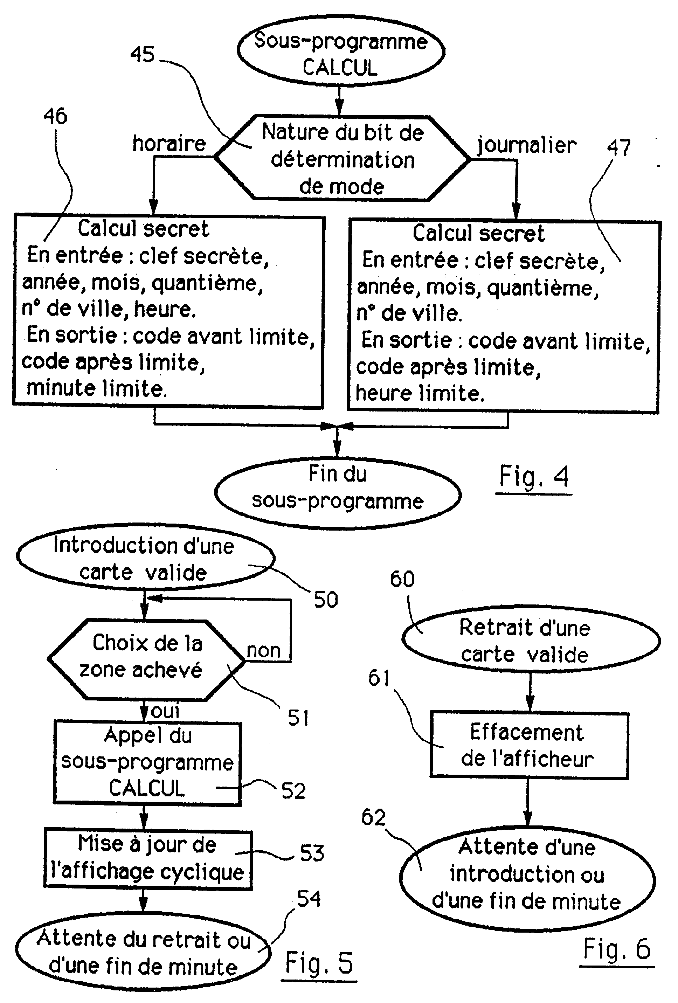

Dans le cas d'un fonctionnement en mode horaire (par exemple, valeur du bit = 1), le système teste tout d'abord s'il se trouve en début d'une période horaire (34) (par exemple, 15H00). Si tel est le cas, le système procèdera à un nouveau calcul 35 des deux codes valables pour la nouvelle période horaire, ainsi que de la "minute limite" de passage du premier code au deuxième code (voir fig. 4).

Le système effectue ensuite un nouveau test 36 permettant de déterminer si l'on se trouve à la "minute limite" de changement de code. Dans la négative, le système mettra simplement à jour (37) la valeur de l'heure courante dans l'affichage cyclique déroulant du boîtier, et se mettra en sommeil 38 dans l'attente d'une nouvelle interruption, soit de fin de minute, soit de retrait de la carte.

En revanche, si le test de "minute limite" 36 est positif, le second code de la période horaire en cours viendra remplacer (39) le premier code, dans l'affichage cyclique du boîtier. Le système exécute ensuite les étapes de mise à jour 37 de l'heure courante affichée et de mise en sommeil 38.

Dans le cas où le test 33 du mode de fonctionnement indique un fonctionnement en mode journalier, le système réalise un test 40 déterminant si on se trouve en début d'heure (identique au test 34). Dans la négative, il y a simple mise à jour 37 de l'heure courante affichée, puis mise en sommeil 38.

En revanche, si l'on se trouve en début de période horaire, le système teste 41 si l'heure courante est une "heure limite" à laquelle le second code journalier doit se substituer au premier code journalier. Suivant les résultats du test, il y aura alors ou non remplacement 39 du premier code par le second code dans l'affichage cyclique, avant mise à jour 37 de l'heure courante affichée et mise en sommeil 38.

La figure 4 schématise la structure du sous-programme CALCUL, qui assure l'élaboration des codes secrets et des périodes de changement de code à partir d'un algorithme secret.

Lorsque ce sous-programme CALCUL est appelé, il effectue tout d'abord un test 45 du mode de fonctionnement du système : horaire ou journalier.

En cas de mode de fonctionnement horaire, le calcul secret est effectué à partir des données suivantes :
- une clé secrète, qui est avantageusement mémorisée dans une EEPROM, lors de la fabrication ou de la configuration du boîtier. Une fois stockée dans l'EEPROM, cette clé n'est plus accessible de l'extérieur ;
- l'information de la date courante, par exemple de l'année, du mois et du quantième du jour courant ;
- une donnée numérique représentative de l'aire de validité de la carte, par exemple un code numérique de ville ;
- un code numérique représentatif de l'heure courante.

L'algorithme secret fournit, à partir de ces données d'entrée, un code numérique (par exemple sur 16 octets), qui va servir à déterminer :
- le premier code secret de la période horaire en cours ;
- le second code secret de la période horaire en cours ;
- la minute limite de passage du premier code au second code dans la période horaire en cours.

On constate qu'avec ce processus, le calcul secret vérifie les conditions suivantes :
- il est élaboré à partir d'information provenant du boîtier (clé secrète, date, heure, algorithme), et d'informations provenant de la carte (code de ville) ;
- il est spécifique à chaque ville (du fait qu'il prend en compte le code de ville) ;
- il est spécifique à chaque jour, et à chaque période horaire, du fait que ces deux paramètres sont également pris en compte.

Symétriquement, dans le cas où l'appareil fonctionne en mode journalier, le calcul secret 47 fonctionne avec en entrée :
- la clé secrète,
- la date (année, mois, quantième),
- le code de ville.

Il fournit en sortie le premier code journalier, le second code journalier, et l'heure limite de changement de code.

La figure 5 illustre le fonctionnement du système lors de l'introduction 50 d'une carte valide.

Après introduction 50, le système requiert la sélection d'un numéro de zone de stationnement, correspondant à une réglementation particulière du stationnement pour la ville considérée (celle qui a émis la carte introduite dans le boîtier). Cette période de sélection est schématisée par le test répétitif 51.

Lorsque le choix de la zone est achevé, le système appelle le programme de calcul secret 52 (fig. 4), puis met à jour l'affichage cyclique en fonction des résultats du calcul et du dépassement ou non de la limite calculée (53). Il se met ensuite en sommeil 54 jusqu'à interruption par une fin de minute, ou un retrait de carte.

Comme représenté en figure 6, tout retrait de carte 60 provoque un effacement 61 de l'afficheur, puis une mise en sommeil 62 jusqu'à introduction d'une nouvelle carte dans le boîtier ou d'une fin de minute.

Selon un mode de réalisation préférentiel de l'invention, les codes et le moment de changement de code sont chacun déterminés sur 8 bits et les codés s'affichent sous la forme de nombres hexadécimaux compris entre 00H et FFH. Les treize octets restants ne sont pas utilisés.

Afin de rendre l'utilisateur responsable du bon fonctionnement de son boîtier et d'éviter la présence de circuits complexes servant à compenser les dérives en fréquence du quartz utilisé dans la base de temps du dispositif de l'invention, ces dérives étant dues aux fortes variations de température derrière le pare-brise d'un véhicule, il s'avère avantageux de permettre à l'utilisateur de régler lui-même l'heure et la date courantes sur son boîtier. Ces réglages sont effectués à l'aide des deux touches 15 et 16 (fig.1), en les enfonçant en même temps qu'une carte est introduite dans le boîtier 10 et en appuyant sur l'une ou l'autre touche pour faire avancer ou reculer l'année, le mois, le quantième, les heures et les minutes.

Cette possibilité permet cependant à un utilisateur indélicat de connaître à l'avance les codes et les moments de changement de code s'il avance l'heure et/ou la date de son boîtier. Par exemple, si les cartes de paiement de stationnement d'une ville mettent le dispositif en mode de changement horaire du code (deux codes différents toutes les heures), il suffit de régler l'heure du boîtier par exemple à 14H59 pour un certain jour pour connaître à la fois le code de ce jour là à 14H59, et au bout d'une minute, le code qu'affichera le dispositif à partir de 15H00. Bien entendu, il faudrait également faire une recherche manuelle, par exemple par une méthode de dichotomie, pour connaître exactement le moment de changement de code qui s'opérera entre 15H00 et 16H00. Pour dissuader l'instauration d'une telle pratique, l'invention propose de ne pas afficher immédiatement le code, après avoir effectué une mise à l'heure et introduit une carte. Ainsi, après avoir introduit une carte de paiement de stationnement dans le boîtier, des moyens de temporisation d'une durée de quelques dizaines de secondes (par exemple 40s, voire plus d'une minute) sont activés et le code correspondant au jour et à l'heure mémorisés n'apparaît qu'au bout de la période de temporisation. De plus, il est nécessaire de retirer la carte et de l'introduire à nouveau dans le boîtier pour remodifier l'heure. Cette opération est fastidieuse et, de plus, lorsque le code apparaît, une unité de crédit de stationnement est automatiquement débitée de la carte, c'est à dire qu'une telle tentative de fraude est onéreuse. Ces divers inconvénients et contraintes ont donc pour objectif de dissuader une éventuelle tentative de fraude, celle-ci n'étant pas rentable notamment au vu du temps passé pour obtenir les codes et les moments de changement de code.

Les contrôles de régularité du stationnement permettent à la fois de détecter les éventuelles imitations ou contrefaçons, grâce à l'affichage du code, et de vérifier qu'un véhicule n'est pas en infraction pour dépassement de temps limite de stationnement ou pour épuisement des unités de taxe. Pour vérifier que le code affiché est bien le bon, le contrôleur peut être équipé d'un boîtier de référence fonctionnant par exemple sans carte de paiement ou avec des cartes spéciales. Il peut également comparer le code affiché par un boîtier avec ceux d'autres véhicules déjà contrôlés. On peut également envisager une utilisation de boîtiers spéciaux. Une autre possibilité consiste à comparer les codes affichés par les boîtiers avec ceux figurant sur une liste confidentielle dont chaque contrôleur est en possession.

La présente invention s'applique bien entendu également aux dispositifs de comptabilisation de durées de stationnement réglementé où l'heure n'est pas modifiable par l'utilisateur.

## Revendications

1. Système de comptabilisation du temps, notamment pour la comptabilisation de durées de stationnement réglementé, comprenant :
- d'une part un pluralité d'éléments (17) mémorisant des unités de temps consommables décrémentables,
- d'autre part une pluralité de boîtiers (10) détenus chacun par un utilisateur distinct et aptes à coopérer de manière séparable avec lesdits éléments à unités de temps consommables pour en décrémenter les unités de temps en fonction de la durée de stationnement,
caractérisé en ce que :
- chaque boîtier comprend des moyens de calcul (31) déterminant au moins deux codes secrets, le passage d'un code secret à l'autre étant effectué sensiblement à un même moment pour tous lesdits boîtiers et lesdits codes secrets étant identiques pour tous lesdits boîtiers sensiblement au même moment pour permettre à un contrôleur de vérifier l'authenticité desdits boîtiers,
- en ce que ledit moment de changement de code résulte d'un calcul secret, et
- en ce que chacun desdits éléments à unités de temps consommables comporte une information déterminant la période de temps dans laquelle le changement de code doit avoir lieu, ladite information étant modifiable.

2. Système selon la revendication 1 caractérisé en ce que chacun desdits boîtiers (10) comprend une horloge intégrée (33) autonome coopérant avec lesdits moyens de calcul (31) pour générer lesdits codes à une date et heure données.

3. Système selon l'une quelconque des revendications 1 et 2 caractérisé en ce que lesdits moyens de calcul (31) déterminent deux codes pour une même journée, le passage d'un code à l'autre étant effectué une fois par jour à une heure et à une minute résultant d'un calcul secret.

4. Système selon l'une quelconque des revendications 1 et 2 caractérisé en ce que lesdits moyens de calcul (31) déterminent deux codes pour chaque période horaire, le passage d'un code à l'autre dans la même période horaire étant effectué à une minute résultant d'un calcul secret.

5. Système selon l'une quelconque des revendications 1 à 4, caractérisé en ce que ledit calcul secret est élaboré à partir d'au moins une donnée provenant du boîtier (10) et d'au moins une donnée provenant de l'élément (17) à unités consommables.

6. Système selon l'une quelconque des revendications 1 à 5 caractérisé en ce que lesdits codes résultent d'un calcul mettant en oeuvre au moins une information appartenant au groupe comprenant la date du jour (32), l'heure courante, un code numérique (30) caractérisant l'aire de validité de l'élément (17) inséré dans le boîtier (10), et une clé secrète.

7. Système selon l'une quelconque des revendications 1 à 6 caractérisé en ce que lesdits moyens de calcul (31) génèrent ledit moment de changement de code, un code précédant ledit moment de changement de code et un code suivant ledit moment de changement de code.

8. Système selon l'une quelconque des revendications 1 à 7 caractérisé en ce que ledit boîtier (10) comporte des moyens d'affichage (11) notamment de l'heure courante, et/ou dudit code courant et/ou de l'heure de début de stationnement.

9. Système selon la revendication 8 caractérisé en ce que ledit boîtier (10) comporte des moyens (15,16) de remise à l'heure courante et des moyens de temporisation retardant systématiquement d'au moins plusieurs dizaines de secondes l'affichage du code courant (14) sur lesdits moyens d'affichage (11) après qu'une remise à l'heure courante a été effectuée, de façon à dissuader toute tentative de fraude.

10. Système selon l'une quelconque des revendications 8 et 9 caractérisé en ce que ledit code courant (14) apparaît sur lesdits moyens d'affichage (11) sous forme d'un nombre hexadécimal codé sur deux chiffres.

11. Système selon l'une quelconque des revendications 1 à 10 caractérisé en ce que lesdits codes et ledit moment de changement de code sont calculés automatiquement en début de stationnement par introduction dudit élément à unités de temps consommables (17) dans ledit boîtier (10).

12. Système selon l'une quelconque des revendications 1 à 11 caractérisé en ce que lesdits codes et ledit moment de changement de code sont calculés automatiquement au début de chaque heure.

## Patentansprüche

1. System zur Verwaltung von Zeiteinheiten, insbesondere für die Verwaltung von Parkdauereinheiten, das aufweist:
zum einen eine Vielzahl von Elementen (17), die dekrementierbare verbrauchbare Zeiteinheiten speichern,
zum anderen eine Vielzahl von Boxen (10), die jeweils einem unterschiedlichen Benutzer gehören und die in der Lage sind, auf getrennte Weise mit den Elementen mit konsumierbaren Zeiteinheiten zusammenzuwirken, um die Zeiteinheiten in Funktion der Parkdauer zu dekrementieren,
**dadurch gekennzeichnet**,
daß jede Box Recheneinrichtungen (31) aufweist, die zumindest zwei geheime Codes bestimmen, wobei der Übergang von einem geheimen Code zu einem anderen im wesentlichen im gleichen Augenblick für alle Boxen geschieht und wobei die geheimen Codes identisch für alle Boxen im wesentlichen im gleichen Augenblick sind, um einem Kontrolleur zu erlauben, die Authentizität der Boxen zu verifizieren,
daß der Augenblick der Änderung des Codes sich aus einer geheimen Berechnung ergibt, und
daß jedes der Elemente mit konsumierbaren Zeiteinheiten eine Information aufweist, die die Zeitperiode bestimmt, in der die Änderung des Codes stattfinden muß, wobei die Information modifizierbar ist.

2. System gemäß Anspruch 1, dadurch gekennzeichnet, daß jede der Boxen (10) eine integrierte autonome Uhr (33) aufweist, die mit den Recheneinrichtungen (31) zusammenwirkt, um die Codes zu einem gegebenen Datum und einer gegebenen Uhrzeit zu erzeugen.

3. System gemäß einem der Ansprüche 1 und 2, dadurch gekennzeichnet, daß die Recheneinrichtungen (31) zwei Codes für einen gleichen Tag bestimmen, wobei der Übergang von einem Code zu einem anderen einmal pro Tag zu einer Stunde und einer Minute geschieht, die sich aus einer geheimen Berechnung ergibt.

4. System gemäß einem der Ansprüche 1 und 2, dadurch gekennzeichnet, daß die Recheneinrichtungen (31) zwei Codes für jede Zeitperiode bestimmen, wobei der Übergang von einem Code zu einem anderen in der gleichen Zeitperiode zu einer Minute durchgeführt wird, die sich aus einer geheimen Berechnung ergibt.

5. System gemäß einem der Ansprüche 1 bis 4, dadurch gekennzeichnet, daß die geheime Berechnung ausgehend von zumindest einer Dateneinheit ausgeführt wird, die von der Box (10) kommt, und von zumindest einer Dateneinheit, die von dem Element (17) mit konsumierbaren Einheiten kommt.

6. System gemäß einem der Ansprüche 1 bis 5, dadurch gekennzeichnet, daß die Codes sich aus einer Berechnung ergeben, die zumindest eine Information umsetzt, die zu der Gruppe gehört, die das Datum des Tages (32), die laufende Stunde, einen numerischen Code (30), der den Gültigkeitsbereich des Elementes (17), das in die Box (10) eingefügt ist, charakterisiert, und einen geheimen Schlüssel aufweist.

7. System gemäß einem der Ansprüche 1 bis 6, dadurch gekennzeichnet, daß die Recheneinrichtungen (31) den Augenblick der Änderung des Codes, einen Code, der dem Augenblick der Änderung des Codes vorangeht, und einen Code, der dem Augenblick der Änderung des Codes folgt, erzeugen.

8. System gemäß einem der Ansprüche 1 bis 7, dadurch gekennzeichnet, daß die Box (10) Anzeigeeinrichtungen (11), insbesondere der laufenden Stunde und/oder des laufenden Codes und/oder der Stunde des Beginns des Parkens aufweist.

9. System gemäß Anspruch 8, dadurch gekennzeichnet, daß die Box (10) Einrichtungen (15, 16) zum Rücksetzen der laufenden Stunde und Einrichtungen zur Zeitgabe aufweist, die systematisch die Anzeige des laufenden Codes (14) auf den Anzeigeeinrichtungen (11) um zumindest mehrere Zehntel Sekunden verzögern, nachdem ein Zurücksetzen auf die laufende Stunde durchgeführt worden ist, um jeden Betrugsversuch zu vereiteln.

10. System gemäß einem der Ansprüche 8 und 9, dadurch gekennzeichnet, daß der laufende Code (14) auf den Anzeigeeinrichtungen (11) in Form einer auf zwei Ziffern codierten hexadezimalen Zahl erscheint.

11. System gemäß einem der Ansprüche 1 bis 10, dadurch gekennzeichnet, daß die Codes und der Augenblick der Änderung des Codes automatisch zu Beginn des Parkens durch Einführung des Elements mit verbrauchbaren Zeiteinheiten (17) in die Box (10) berechnet werden.

12. System gemäß einem der Ansprüche 1 bis 11, dadurch gekennzeichnet, daß die Codes und der Augenblick der Änderung des Codes automatisch zu Beginn jeder Stunde berechnet werden.

## Claims

1. Time-accounting system, notably for the accounting of regulated parking time durations, including:
- on the one hand, a plurality of elements (17) storing down-countable consumable time units,
- on the other hand, a plurality of boxes (10), each held by a distinct user, and each able to co-operate in a separable manner with said elements with consumable time units so as to count down the time units depending on the parking time,
characterized in that:
- each box comprises computing means (31) that determine at least two secret codes, the changing from one secret code to another being done substantially at the same instant for all of said boxes and said secret codes being identical for all of said boxes substantially at the same instant to enable a checker to ascertain the authenticity of said boxes
- said code-changing instant results from a secret computation, and
- each of said element with consumable time units includes an information element determining the time duration during which said changing of the secret code must take place, said information element being changeable.

2. System according to claim 1, characterized in that each of said boxes (10) includes an independent integrated clock (33) cooperating with said computing means (31) to generate said codes at a given date and time.

3. System according to claim 1 or 2, characterized in that said computing means (31) determine two codes for the same day, the passage from one code to the other being done once a day at an hour and a minute that result from a secret computation.

4. System according to claim 1 or 2, characterized in that said computing means (31) determine two codes for each one-hour period, the changing from one code to the other in the same one-hour period being done at a minute that results from a secret computation.

5. System according to claim 1 to 4, characterized in that said secret computation is derived from at least one element of data coming from the box (10) and at least one element of data coming from the element (47) with consumable units.

6. System according to claim 1 to 5, characterized in that said codes result from a computation that makes use of at least one information element belonging to the group comprising the current date (32), the current hour, a digital code (30) characterizing the area of validity of the element (17) inserted into the box (10), and a secret key.

7. System according to claim 1 to 6, characterized in that said computing means (31) generate said code-changing instant, a code preceding said code-changing instant and a code following said code-changing instant.

8. System according to claim 1 to 7, characterized in that said box (10) comprises display means (11), notably to display the current hour and/or said current code and/or the parking beginning time.

9. System according to claim 8, characterized in that said box (10) comprises means (15, 16) for being reset at the current time, and delay means that systematically delay the display of the current code (14) on said display means (11) by several tens of seconds after a resetting at the current hour has been done, so as to discourage any attempt at fraud.

10. System according to claim 8 or 9, characterized in that said current code (14) appears on said display means (11) in the form of a hexadecimal number encoded on two digits.

11. System according to claim 1 to 10, characterized in that said codes and said code-changing instant are computed automatically at the beginning of the parking by the introduction of said element with consumable time units (17) into said box (10).

12. System according to claim 1 to 11, characterized in that said codes and said code-changing instant are computed automatically at the beginning of each hour.
